# EUROPEAN PATENT SPECIFICATION

(11) **EP 3 822 236 B1**
(45) Date of publication and mention of the grant of the patent: **01.01.2025**
(21) Application number: 21150173.9
(22) Date of filing: 25.11.2015
(51) Int. Cl.: C03C 17/30, C08F 257/02, C09D 183/06, C08G 77/02, C08G 77/14, C09D 183/02

(54) **ANTIGLARE TOUCH SCREEN DISPLAYS AND OTHER COATED ARTICLES AND METHODS OF FORMING THEM**
BERÜHRUNGSBILDSCHIRMANZEIGEN MIT BLENDSCHUTZ UND ANDEREN BESCHICHTETEN ARTIKELN UND VERFAHREN ZUR HERSTELLUNG DAVON
ÉCRANS TACTILES ANTIREFLET ET AUTRES ARTICLES REVÊTUS ET LEURS PROCÉDÉS DE FORMATION

(30) Priority: 25.11.2014 US 201462084170 P
(43) Date of publication of application: 19.05.2021
(62) Divisional of application: 15813635.8
(73) Proprietor: PPG Industries Ohio, Inc., Cleveland, OH 44111 (US)
(72) Inventor: LU, Songwei, Wexford, Pennsylvania 15090 (US)
(74) Representative: f & e patent

(56) References cited:
- EP-A1- 1 873 126
- EP-A2- 1 144 486
- JP-A- 2014 006 443

## Description

### FIELD OF THE INVENTION

The present invention relates to touch screen displays, comprising substrates coated with an antiglare coating.

### BACKGROUND OF THE INVENTION

Information displays such as touch screen displays appear more and more frequently on interactive electronic devices. Reducing glare of the screens, a brightness caused by the reflection of incident light, is desired to maximize visibility of the displays in different lighting environments. There are various known methods of reducing the glare of transparent substrate surfaces. An exemplary method involves depositing a light interference coating stack on the substrate that reduces reflection by exploiting the optical interference within adjacent thin films. Such films usually have a thickness of about one-quarter or one-half the nominal wavelength of visible light, depending on the relative indices of refraction of the coatings and substrate. Interference coatings reduce glare without reducing resolution. However, they are relatively expensive to deposit, requiring the use of vacuum deposition techniques such as sputtering and precise manufacturing conditions, or very precise alkoxide solution dip coating techniques, with subsequent drying and firing steps. Strict processing parameters must be observed to obtain the desired results.

Another method of reducing glare on displays involves forming a light scattering means at the surface of the substrate, such as by mechanically or chemically altering the outermost surface of the substrate or through use of a diffuser coating or a glare reducing film on the substrate.

Some antiglare coatings cause an undesirable visual side-effect called visual sparkling effect, resulting from the interaction of light from a regular display pixel matrix with irregular microstructures present in the antiglare coating surface. Most antiglare surfaces such as acid-etched antiglare surfaces have a sparkling issue on high pixel per inch (PPI) displays.

Another option is the use of fillers. Fillers are widely used in the coatings industry to affect gloss and they are known to provide glare reduction to substrates in many cases. Fillers control gloss by affecting the surface roughness of an applied coating.

Etching the outer surface of the substrate or otherwise chemically or mechanically modifying the outer surface of a coating deposited on the substrate has also been attempted in an effort to reduce glare by diffusive reflection of light. There are numerous drawbacks to such modification techniques. Etching by chemical means involves handling and storage of generally highly corrosive compounds (e.g. hydrofluoric acid). Such compounds create processing and disposal problems in view of increasingly stringent environmental laws. Etching by non-chemical means, such as by sandblasting, necessitates additional and costly processing operations.

For touch screens such as those used on smart phones and tablets, a durable, anti-smudge coating is desired to ensure the cleanness and clarity of the touch screen surface. The anti-smudge coating is also expected to have a very smooth, silky, and slippery feel. Various super-hydrophobic coatings have demonstrated different degrees of anti-smudge properties and slipperiness. However, it is very difficult to achieve a better wear durability as tested using #0000 steel wool after more than 6000 cycles, and a coefficient of friction (COF) of ≤0.03.

It would be desirable to provide an alternative method of forming an antiglare coating on a substrate while ameliorating or avoiding at least some of the drawbacks of the prior art, and to provide touch screen displays that demonstrate superior properties.

EP 1 873 126 A1 relates to anti-glare glass substrates used for liquid crystal display devices with a coating having on its surface projection bodies, which have round bottom surfaces and are randomly arranged on the coating at a density of 5 or more projection bodies per an area equivalent to one pixel of the liquid crystal display device.

JP 201406443 A relates to a manufacturing method for a substrate with an antireflection film composed of a high refractive index layer formed on the substrate and a low refractive index layer formed on the high refractive index layer including coating a dispersion liquid of high refractive index metallic oxide with a refractive index in a range from 1.50 to 2.40 containing 1 to 1,000 ppm of a basic nitrogen compound on the substrate, removing the dispersion medium at a temperature which is less than boiling point of the basic nitrogen compound, coating a dispersion liquid of low refractive index layer forming components, removing the dispersion medium, and then heat treating at 120 to 700°C.

EP 1 144 486 A2 relates to certain abrasion resistant coating compositions and coated articles made therefrom.

### SUMMARY OF THE INVENTION

It has surprisingly been found that certain curable film-forming compositions comprising a silane are useful to achieve these objectives.
The present invention relates to touch screen displays demonstrating antiglare properties as defined in appended independent claim 1. Specific variants of the touch screen display of the present invention are set forth in the appended dependent claims.

The touch screen display demonstrating antiglare properties comprises a substrate and a coating formed by applying a curable film-forming composition comprising a silane, a mineral acid, and a solventto at least one surface of the substrate and curing of the curable film-forming composition. The coating is formed by a process comprising (a) heating the substrate to a temperature of 200°F to 400°F (93.3 to 204.4°C) to form a heated substrate; (b) spray applying the curable film-forming composition to at least one surface of the heated substrate to form a coated substrate; and (c) subjecting the coated substrate to thermal conditions for a time sufficient to effect cure of curable film-forming composition.The cured coating demonstrates a surface roughness (Rₐ) of no more than 80 nm and a pencil hardness of at least 8H, conforming with ASTM-D3363 standard, using HA-3363 Garoco^{®} Pencil Scratch Hardness Kit from Paul N. Gardner Company, Inc., under a 500 g load.

### DETAILED DESCRIPTION OF THE INVENTION

Other than in any operating examples, or where otherwise indicated, all numbers expressing quantities of ingredients, reaction conditions and so forth used in the specification and claims are to be understood as being modified in all instances by the term "about." Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

As used in this specification and the appended claims, the articles "a," "an," and "the" include plural referents unless expressly and unequivocally limited to one referent.

The various examples of the present invention as presented herein are each understood to be non-limiting with respect to the scope of the invention.

As used in the following description and claims, the following terms have the meanings indicated below:

By "polymer" is meant a polymer including homopolymers and copolymers, and oligomers. By "composite material" is meant a combination of two or more differing materials.

The term "curable", as used for example in connection with a curable composition, means that the indicated composition is polymerizable or cross linkable through functional groups such as alkoxysilane and silanol groups, by means that include, but are not limited to, thermal (including ambient cure), catalytic, electron beam, chemical free-radical initiation, and/or photoinitiation such as by exposure to ultraviolet light or other actinic radiation.

By "ambient conditions" is meant the condition of surroundings without adjustment of the temperature, humidity or pressure. For example, a composition that cures at ambient temperature undergoes a thermosetting reaction without the aid of heat or other energy, for example, without baking in an oven, use of forced air, or the like. Usually, ambient temperature ranges from 60 to 90 °F (15.6 to 32.2 °C), such as a typical room temperature, 72°F (22.2°C).

The term "cure", "cured" or similar terms, as used in connection with a cured or curable composition, e.g., a "cured composition" of some specific description, means that at least a portion of any polymerizable and/or crosslinkable components that form the curable composition is polymerized and/or crosslinked. Additionally, curing of a composition refers to subjecting said composition to curing conditions such as those listed above, leading to the reaction of the reactive functional groups of the composition. The term "at least partially cured" means subjecting the composition to curing conditions, wherein reaction of at least a portion of the reactive groups of the composition occurs. The composition can also be subjected to curing conditions such that a substantially complete cure is attained and wherein further curing results in no significant further improvement in physical properties, such as hardness.

The term "reactive" refers to a functional group such as an alkoxysilane or silanol group, capable of undergoing a chemical reaction with itself and/or other functional groups spontaneously or upon the application of heat or in the presence of a catalyst or by any other means known to those skilled in the art.

The terms "on", "appended to", "affixed to", "bonded to", "adhered to", or terms of like import means that the designated item, e.g., a coating, film or layer, is either directly connected to the object surface, or indirectly connected to the object surface, e.g., through one or more other coatings, films or layers.

The term "optical quality", as used for example in connection with polymeric materials, e.g., a "resin of optical quality" or "organic polymeric material of optical quality" means that the indicated material, e.g., a polymeric material, resin, or resin composition, is or forms a substrate, layer, film or coating that can be used as an optical article, such a glazing, or in combination with an optical article.

The term "rigid", as used for example in connection with an optical substrate, means that the specified item is self-supporting.

The term "optical substrate" means that the specified substrate is suitable for use in an optical article. Optical articles include, but are not limited to, lenses, optical layers, e.g., optical resin layers, optical films and optical coatings, and optical substrates having a light influencing property.

The term "transparent", as used for example in connection with a substrate, film, material and/or coating, means that the indicated substrate, coating, film and/or material has the property of transmitting visible light without appreciable scattering so that objects lying beyond are entirely visible.

By "essentially free" is meant that if a compound is present in a composition, it is present incidentally in an amount less than 0.1 percent by weight, often less than 0.05 percent by weight or less than 0.01 percent by weight, based on the total weight of the composition; usually less than trace amounts. As mentioned above, the present disclosure provides a curable film-forming composition comprising:
(i) a silane
(ii) a mineral acid; and
(iii) a solvent. The silane (i) in the curable film-forming composition typically comprises one or more alkoxysilane(s). The silane (i) can e.g. comprise a tetraalkoxysilane such as tetramethoxysilane and/or tetraethoxysilane. The silane (i) is present in the curable film-forming composition in an amount of less than 32 percent, such as less than 15 percent, or less than 7 percent by weight, based on the total weight of the curable film-forming composition. Typically the silane (i) is present in the curable film-forming composition according to the present invention in an amount of at least 1 percent by weight and less than 32 percent, often less than 15 percent, or more often less than 7 percent by weight, based on the total weight of the curable film-forming composition.

The curable film-forming composition further comprises (ii) a mineral acid; i. e., inorganic acid. Suitable mineral acids include sulfuric acid, nitric acid, hydrochloric acid, and the like. Nitric acid is most often used. Mixtures of two or more mineral acids such as those mentioned above can be used as well. The mineral acid is present in the curable film-forming composition according to the present invention in an amount such that the weight ratio of mineral acid to silane is greater than 0.008:1, typically greater than 0.02:1, or greater than 0.04:1, or greater than 0.06:1. The weight ratio of mineral acid to silane is typically less than 0.12:1.

The curable film-forming composition additionally comprises (iii) a solvent. Suitable solvents typically have hydroxyl functional (i. e., alcohol) and/or ether functional groups. Examples include glycol ethers such as propylene glycol methyl ether, propylene glycol methyl ether acetate, dipropylene glycol monomethyl ether, and/or diethylene glycol monobutyl ether. Lower alkyl alcohols (e. g., having less than six carbon atoms) such as isopropanol and ethanol are also suitable.

The curable film-forming compositions can optionally include a variety of further ingredients and/or additives depending on the particular application such as the intended application of a final coated article derived from the curable film-forming composition. For example, the composition may contain an ingredient that exhibits a light influencing property such as a colorant. Other optional ingredients include rheology control agents, surfactants, initiators, catalysts, cure-inhibiting agents, reducing agents, acids other than the mineral acid (ii), bases, preservatives, free radical donors, free radical scavengers and thermal stabilizers, which adjuvant materials are known to those skilled in the art. Typically the curable film-forming composition is essentially free of particles that may cause light scattering in the final coating, for example inorganic oxide particles such as metal oxide particles or silica. Such particles were sometimes used in antiglare coatings of the prior art because they serve to decrease the gloss of the coating layer by increasing the surface roughness thereof or otherwise causing light scattering due to their optical properties. In contrast, the curable film-forming compositions of the present disclosure have been designed for application to heated substrates to provide anti-glare surfaces. The use of light-scattering particles is not necessary to achieve an anti-glare effect.

The curable film-forming compositions may include a colorant, although typically the compositions are colorless and transparent. They are also usually optically clear.

As used herein, the term "colorant" means any substance that imparts color and/or other visual effect to the composition. The colorant can be added to the coating composition in any suitable form, such as discrete particles, dispersions, solutions and/or flakes. A single colorant or a mixture of two or more colorants can be used in the coating compositions.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coating compositions by grinding or simple mixing. Colorants can be incorporated by grinding into the coating compositions by use of a grind vehicle, such as an acrylic grind vehicle, the use of which will be familiar to one skilled in the art. However, particulate colorants that may cause light scattering are generally avoided.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), carbon black and mixtures thereof. The terms "pigment" and "colored filler" can be used interchangeably. Inorganic oxide pigments are typically not used.

Example dyes include, but are not limited to, those that are solvent and/or aqueous based such as acid dyes, azoic dyes, basic dyes, direct dyes, disperse dyes, reactive dyes, solvent dyes, sulfur dyes, mordant dyes, for example, bismuth vanadate, anthraquinone, perylene, aluminum, quinacridone, thiazole, thiazine, azo, indigoid, nitro, nitroso, oxazine, phthalocyanine, quinoline, stilbene, quinizarin blue (D&C violet No. 2), and triphenyl methane.

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemical, Inc.

In general, the colorant can be present in the coating composition in any amount sufficient to impart the desired property, visual and/or color effect. The colorant may e.g. comprise from 1 to 65 weight percent of the present compositions, such as from 3 to 40 weight percent or 5 to 35 weight percent, with weight percent based on the total weight of the compositions.

The curable film-forming composition has a solids content of less than 10 percent by weight, such as less than 8 percent by weight, less than 7 percent by weight or less than 5 percent by weight, based on the total weight of the curable film-forming composition. The curable film-forming composition can e.g. have a solids content of 0.1 percent by weight to less than 10 percent by weight, such as 0.5 percent by weight to 9 percent by weight, usually from 1 to 8 percent by weight, from 1 to 7 percent by weight or from 1 to 5 percent by weight, based on the total weight of the curable film-forming composition. A relatively low solids content/high solvent content influences the evaporation process of the curable film-forming composition during application to a heated substrate, and thus may have an effect on the surface roughness of the cured film.

The curable film-forming compositions may be prepared as described in the Examples herein.

The curable film-forming composition forms a sol-gel. For instance it may be applied to at least a portion of a surface of a substrate to form a sol-gel layer. Sol-gels are dynamic systems wherein a solution ("sol") gradually evolves into a gel-like two-phase system containing both a liquid phase and solid phase, whose morphologies range from discrete particles to continuous polymer networks within the continuous liquid phase. Sol-gel formation may involve hydrolysis and at least partial condensation of the silane (i) such as alkoxysilane(s) present in the curable film-forming composition prior to curing of the curable composition or layer formed therefrom. Curing of the formed sol-gel may then lead to a cured inorganic network matrix.

The above-mentioned curable film-forming composition is used for preparing a touch screen display demonstrating antiglare properties. Substrates suitable for use in the preparation of the touch screen displays of the present invention can include glass or any of the plastic optical substrates known in the art, provided the material can withstand temperatures of at least 100°F (37.8 °C) without deformation. The substrates typically have at least one flat surface.

Suitable glass substrates include soda-lime-silica glass, such as soda-lime-silica slide glass sold from Fisher, or aluminosilicate glass such as Gorilla^{®} glass from Corning Incorporated, or Dragontrail^{®} glass from Asahi Glass Co., Ltd. In the present invention, the substrate is usually transparent and/or has at least one flat surface. Suitable examples of plastic substrates include polymers prepared from polyol(allyl carbonate) monomers, e.g., allyl diglycol carbonates such as diethylene glycol bis(allyl carbonate), which monomer is sold under the trademark CR-39 by PPG Industries, Inc.; polyurea-polyurethane (polyurea urethane) polymers, which are prepared, for example, by the reaction of a polyurethane prepolymer and a diamine curing agent, a composition for one such polymer being sold under the trademark TRIVEX^{®} by PPG Industries, Inc.; polymers prepared from polyol(meth)acryloyl terminated carbonate monomer, diethylene glycol dimethacrylate monomers, ethoxylated phenol methacrylate monomers, diisopropenyl benzene monomers, ethoxylated trimethylol propane triacrylate monomers, ethylene glycol bismethacrylate monomers, polyethylene glycol) bismethacrylate monomers, or urethane acrylate monomers; poly(ethoxylated Bisphenol A dimethacrylate); poly(vinyl acetate); poly(vinyl alcohol); poly(vinyl chloride); poly(vinylidene chloride); polyethylene; polypropylene; polyurethanes; polythiourethanes; thermoplastic polycarbonates, such as the carbonate-linked resin derived from Bisphenol A and phosgene, one such material being sold under the trademark LEXAN; polyesters, such as the material sold under the trademark MYLAR; polyethylene terephthalate); polyvinyl butyral; poly(methyl methacrylate), such as the material sold under the trademark PLEXIGLAS, and polymers prepared by reacting polyfunctional isocyanates with polythiols or polyepisulfide monomers, either homopolymerized or co-and/or terpolymerized with polythiols, polyisocyanates, polyisothiocyanates and optionally ethylenically unsaturated monomers or halogenated aromatic-containing vinyl monomers. Also suitable are copolymers of such monomers and blends of the described polymers and copolymers with other polymers, e.g., to form interpenetrating network products.

In step (a), the substrate is heated to a temperature of 200 to 400°F (93.3 to 204.4°C) to form a heated substrate. For example, the substrate may be heated in step (a) to a temperature of 200 to 350°F (93.3 to 176.7°C), particularly when the substrate is glass.

In step (b), the curable film-forming composition as described above is applied to at least one surface of the heated substrate, to form a substrate coated with a sol-gel layer. The curable film-forming composition is applied to at least a portion of a surface of the heated substrate by spraying, such as ultrasonic spray application, precision spray application, and air atomized spray application. The coating composition may be kept at ambient temperature immediately prior to application. Upon contact with the heated substrate, solvents are typically rapidly, e.g. immediately, vaporized from the coating composition and a sol-gel layer may be formed on the substrate surface. The sol-gel layer may comprise a sol-gel network. The applied sol-gel layer with its commonly irregular surface structure typically has a dry film thickness of less than 10 microns, often less than 5 microns, or less than 3 microns, and may be measured, for example, 24 hours after cure. A dry film thickness is determined by a cross-section method using a scanning electron microscope, measuring from the top surface of the film to the interface between the film and the glass substrate, at 20k x magnification.

The sol-gel composition may optionally be applied to the substrate surface in such a manner as to yield a coated article with a gradient gloss across its surface; e.g. a surface with a gradually increasing gloss across a selected region. A gradient gloss across the surface can e.g. be achieved by varying the thickness of the applied sol-gel layer across the substrate surface such as by gradually decreasing the thickness of the applied sol-gel layer across the substrate surface. As the thickness of the sol-gel layer decreases, the gloss across the substrate surface increases, creating a visual effect. Spray application of the curable film-forming composition may in particular be used to prepare a coated article with a gradient gloss. Rather than evenly spray-applying the composition over the entire surface of the substrate to form a sol-gel layer with a consistent thickness, the spray nozzle may be held stationary over a selected point on the substrate or may make one or more passes over a selected region of the substrate in order to vary the layer thickness locally. The thickness of the applied sol-gel layer may also be controlled by adjusting the distance between the substrate and the spray nozzle as the deposition rate generally decreases with distance from the spray nozzle. The effect may also be achieved using a spray nozzle with graduated flow rates.

After application of the curable film-forming composition to at least a portion of a surface of the heated substrate to form a substrate coated with a sol-gel layer, the coated substrate is then subjected in step (c) to thermal conditions for a time sufficient to effect cure of the sol-gel layer. Thus an antiglare coated article is formed. For example, the coated substrate may be heated to a temperature of at least 120°C such as a temperature of 120°C to 200°C for at least 0.5 hours such as 0.5 to 5 hours, for curing of the sol-gel layer. For instance the coated substrate may be heated to a temperature of at least 120°C, e.g. a temperature of 120°C to 140°C, for at least 3 hours, or the coated substrate may be heated to a temperature of at least 150°C, e.g. a temperature of 150°C to 200°C, for at least 1 hour to cure the sol-gel.

The applied film-forming coating composition forms a matte finish (low gloss), antiglare coating on the substrate. Coated articles of the present invention formed by the method described above typically demonstrate a minimum 60° gloss value of 15 or 20 or 50 gloss units, and a maximum 60° gloss value of 100 or 120 gloss units, as measured by a micro-TRI-gloss meter from BYK-Gardner GmbH. Gloss is measured using a gloss meter, such as the micro-TRI-gloss meter, which directs a light at a specific angle to the test surface and simultaneously measures the amount of reflection. The 60° gloss is measured at an incident angle of 60°. A matte black background with a gloss value of < 0.5 GU is placed under the transparent substrate to minimize the measurement error. The micro-TRI-gloss meter from BYK-Gardner GmbH conforms with ISO 2813, ISO 7668, ASTM D 523, ASTM D 2457, DIN 67530, JIS Z8741. Coated articles of the present invention demonstrate reduced glare (direct reflection of incident light) without reducing resolution of a display viewed through the article. This is particularly advantageous as the coated article is a touch screen, for an electronic device such as a phone, monitor, tablet, or the like.

Optionally at least one additional coating composition may be applied to the coated article after step (c). For example, an anti-fouling coating, anti-smudge coating, and/or sealant layer may be superimposed on at least one surface of the cured sol-gel layer. Anti-smudge coatings typically demonstrate a DI water contact angle greater than 100°. Suitable sealant layers may comprise perfluorosilane.

The antiglare performance of the curable film-forming coating composition may be achieved by the formation of a sol-gel layer with a surface roughness on the substrate, which occurs upon impingement of the sol-gel composition on the heated substrate. The rapid evaporation of solvent from the coating composition can minimize flow of the composition on the heated substrate surface, and thus prevent the formation of a smooth, high-gloss coating layer. The resulting surface roughness is demonstrated in the microscopic topography of the coating as hills and valleys when a cross section of the coating is viewed. It is noted that if the sol-gel composition is applied to the substrate without prior heating of the substrate surface to at least 100°F (37.8 °C), an antiglare coating typically does not form, but rather a smooth, high gloss coating with high incident light reflection results.

Coated articles provided by the present invention include touch screens, on devices including cell phones, tablets, GPS, voting machines, POS (Point-Of-Sale), or computer screens. Such coated articles may demonstrate a gradient gloss across its surface.

An exemplary touch screen display according to the present invention demonstrates antiglare and often anti-sparkle properties, and may comprise:
(a) a substrate; and
(b) a cured sol-gel layer applied on at least one surface of the substrate to form a coated substrate; wherein the sol-gel layer is deposited from a curable film-forming composition comprising:
   (i) a silane such as a tetraalkoxysilane present in an amount of less than less than 32 percent, or often less than 15 percent, or more often less than 7 percent by weight, based on the total weight of the curable film-forming composition;
   (ii) a mineral acid; and
   (iii) a solvent;
   wherein the weight ratio of mineral acid to silane is greater than 0.008:1 and the curable film-forming composition has a solids content of less than 10 percent by weight.

The touch screen display of the present invention demonstrates antiglare and often anti-sparkle properties. As set forth above, it comprises a substrate and a coating formed by applying a curable film-forming composition comprising inter alia a silane such as tetramethoxysilane and/or tetraethoxysilane to at least one surface of the substrate and curing of the curable film-forming composition. The coating demonstrates a surface roughness (Rₐ) of no more than 80 nm, or no more than 10 nm, or even no more than 1 nm, and a pencil hardness of at least 8H.

Surface roughness (Rₐ) may be determined by testing coated substrates after cure using a Surftest SJ-210 Surface Roughness Measuring Tester from Mitutoyo Corporation. Measurements are usually taken in multiple locations on the substrate and an average reported. Higher values indicate greater roughness. The Surf test SJ-210 Surface Roughness Measuring Tester with a code of 178-561-01A uses a standard type drive unit with a 0.75mN type detector and a compact type display unit. It has a 2 µm stylus tip radius and a detect measuring force of 0.75mN. The tester is first calibrated with a precision roughness specimen with an Rₐ of 2.97 µm. After calibration, the Rₐ measurement is done according ISO 4287-1997 with a traverse speed of 0.5 mm/s, a cutoff related items λc of 0.8, and the number of sampling lengths as 5. A total of 6 data points are taken from the sample surface in the area 5 mm from the edge. The average number is then recorded as the surface roughness Rₐ.

The substrate of the touch screen display can be any substrate as described above such as e.g. a glass substrate. The coating used as a component of the touch screen display may comprise a cured inorganic network matrix. The coating may be prepared from a curable film-forming composition comprising a sol-gel composition such as any of those described above. The coating of the touch screen display may e.g. be formed by a process comprising:
(a) heating the substrate to a temperature of 200°F to 400°F (93.3 to 204.4°C) to form a heated substrate;
(b) spray applying the curable film-forming composition to at least one surface of the heated substrate to form a coated substrate; and
(c) subjecting the coated substrate to thermal conditions for a time sufficient to effect cure of the curable film-forming composition. The coating of the touch screen display according to the present invention is an antiglare coating formed on the substrate by the method of forming an antiglare coating on a substrate described above.

It has been demonstrated that the coating used in the present invention often provides anti-sparkle properties and e.g. does not show a visual sparkling effect on a display with 283 PPI. Sparkle is typically evaluated by a comparative visual ranking, and is directly affected by the surface roughness of the coated substrate. The comparative visual ranking is done by ranking visually by ten people on several samples with a number ranging from 1 to 10, with 1 indicating worst sparkling and 10 indicating no sparkling at all. The average of the 10 values is then calculated for the sample as the sparkling ranking number.

As noted above, the antiglare property of the coating is caused by a rough surface that can be formed by applying the curable film-forming coating composition comprising a silane to the substrate, e.g. by spraying. When light hits the antiglare surface, most of the incident light is scattered in different directions, i.e. is diffusely reflected, resulting in much less light directly reflected.

Each of the aspects and characteristics described above, and combinations thereof, may be said to be encompassed by the present invention.

The following examples are intended to illustrate various aspects of the invention, and should not be construed as limiting the invention in any way.

### EXAMPLES

Examples 1 to 4 demonstrate the preparation of coated articles from curable film-forming compositions in accordance with the present invention. Components listed in Table 1 were combined in mixtures to prepare curable film-forming compositions. Each mixture was then stirred for 30 minutes at ambient temperature to provide a homogenous curable coating solution. To illustrate the methodology, in Example 1, 4 grams of tetraethyl orthosilicate is mixed while stirring with 10 grams of isopropanol in a 500 ml plastic container. Thereafter, 6 grams of DI water is added to the above mixture while stirring followed by 0.4 grams of 70 wt% nitric acid. The solution is then stirred for 30 min during which time the plastic bottle will feel warm due to the hydrolysis reaction. At last, 25 grams of DOWANOL PM and 54.6 grams of DOWANOL PMA are added to the above solution followed by stirring for 30 min. Amounts in Table 1 are given in grams.

**Table 1**

| Example | TEOS¹ | TMOS² | IPA³ | DI water | HNO₃ | DOWANOL PM⁴ | DOWANOL PMA⁵ |
|---|---|---|---|---|---|---|---|
| 1 | 4 | 0 | 10 | 6 | 0.4 | 25 | 54.6 |
| 2 | 8 | 0 | 10 | 6 | 0.4 | 25 | 50.6 |
| 3 | 0 | 4 | 10 | 6 | 0.4 | 25 | 54.6 |
| 4 | 0 | 8 | 10 | 6 | 0.4 | 25 | 50.6 |

| | | | | | | | |
|---|---|---|---|---|---|---|---|
| 1Tetraethyl orthosilicate 2Tetramethoxysilicate 3lsopropanol 4 Propylene glycol methyl ether, available from Dow Chemical Co. 5 Propylene Glycol Methyl Ether Acetate, available from Dow Chemical Co. | | | | | | | |

Glass substrates (2" × 3" × 1mm microscope slide glass purchased from Fisher Scientific) were heated in an oven set to a temperature of 180°C for 6 minutes on a metal sample holder before moving to a spray booth for spraying the coatings. The coating solutions were then sprayed on the glass substrates with a flow rate of 79 g/min with a substrate temperature ranging from 130 to 150 °C using a SPRAYMATION and a Binks 95 automatic HVLP spray gun. Four specimens of each example were prepared. The resultant coating had a thickness in the range of 200 nm to 500 nm due to the irregular surface structure. The coated glass samples were then cured at 150 °C for 60 min in a convection oven.

Optical properties of the coated glass samples were measured, including gloss value at 60° angle, transmittance at 550 nm, color L*, a*, and b*, and haze. The gloss value was measured using a Micro-Tri-gloss meter from BYK-Gardner GmbH. Transmittance, color, and haze were measured using X-Rite 17 Color Spectrophotometer from X-Rite. Transmittance (T) and haze are reported as a percent (%). All physical properties were measured as described herein.

**Table 2**

| Example | Gloss | L* | a* | b* | Haze | T @ 550nm | Pencil Hardness |
|---|---|---|---|---|---|---|---|
| 1 | 84.7 | 96.47 | 0.03 | 0.2 | 6.22 | 91.187 | 9H Pass |
| | 84.6 | 96.42 | 0.03 | 0.19 | 5.92 | 91.028 | 9H Pass |
| | 85.2 | 96.49 | 0.04 | 0.21 | 5.57 | 91.201 | 9H Pass |
| | 88 | 96.49 | 0.03 | 0.23 | 5.72 | 91.224 | 9H Pass |
| 2 | 65.9 | 96.21 | 0.03 | 0.22 | 6.24 | 90.539 | 9H Pass |
| | 63.4 | 96.22 | 0.02 | 0.15 | 6.25 | 90.586 | 9H Pass |
| | 63 | 96.23 | 0.02 | 0.15 | 6.51 | 90.579 | 9H Pass |
| | 70.4 | 96.28 | 0.03 | 0.19 | 6.02 | 90.702 | 9H Pass |
| 3 | 71.4 | 96.34 | 0.04 | 0.19 | 6.63 | 90.82 | 9H Pass |
| | 76.4 | 96.39 | 0.03 | 0.18 | 6.24 | 90.956 | 9H Pass |
| | 70.3 | 96.33 | 0.03 | 0.18 | 6.65 | 90.814 | 9H Pass |
| | 71.3 | 96.44 | 0.03 | 0.21 | 6.52 | 91.102 | 9H Pass |
| 4 | 71 | 96.42 | -0.01 | 0.16 | 4.87 | 91.039 | 9H Pass |
| | 68.7 | 96.39 | -0.01 | 0.13 | 5.34 | 90.966 | 9H Pass |
| | 67.3 | 96.31 | 0 | 0.12 | 5.33 | 90.782 | 9H Pass |
| | 75.2 | 96.48 | 0.03 | 0.19 | 5.88 | 91.206 | 9H Pass |

By adjusting the flow rate using different settings of the spray gun flow valve (i. e., clicks corresponding to discrete settings on the spray gun flow valve with a higher number of clicks yielding a higher flow rate), anti-glare coating examples with different gloss, haze, and Rₐ can be produced following the procedure described above for Examples 1-4. Rₐ is measured by a Surftest SJ-210 Surface Roughness Measuring Tester from Mitutoyo Corporation. Examples 5-10 in Table 3 demonstrate glass substrates coated with coating compositions of Example 1 above, applied at different flow rates.

**Table 3**

| Example | Clicks | Flow rate (g/min) | Gloss | L* | a* | b* | Haze | T @ 550 nm | Ra (µm) |
|---|---|---|---|---|---|---|---|---|---|
| 5* | 12 | 88.6 | 60.2 | 96.22 | -0.18 | 0.22 | 7.14 | 90.667 | 0.103 |
| 6* | 11 | 79.1 | 69.4 | 96.18 | -0.17 | 0.2 | 7.6 | 90.544 | 0.098 |
| 7 | 10 | 71.9 | 83.3 | 96.34 | -0.18 | 0.29 | 6.1 | 90.953 | 0.078 |
| 8 | 9 | 63.8 | 80.4 | 96.33 | -0.16 | 0.25 | 6.71 | 90.894 | 0.078 |
| 9 | 8 | 56.7 | 92.1 | 96.47 | -0.16 | 0.24 | 5.39 | 91.254 | 0.065 |
| 10 | 7 | 47 | 104 | 96.64 | -0.2 | 0.24 | 3.77 | 91.687 | 0.047 |

| | | | | | | | | | |
|---|---|---|---|---|---|---|---|---|---|
| *not in accordance with the present invention | | | | | | | | | |

Examples 11 and 12 illustrate the effect of the pre-heating temperature of the glass substrates on the performance of the coated samples. The solution sample from Example 1 was sprayed in the same manner on room temperature glass substrates (Example 11) and pre-heated glass substrate (heated in the 180 °C oven for 6 min, Example 12). The comparison shows that after being sprayed on the room temperature glass substrates, an anti-glare coating cannot be formed since the gloss is high ( > 135 GU), the haze is low (< 1.3%,) and Rₐ is low (< 0.030 µm). The coating is glossy rather than matte. However, after spraying on the pre-heated glass substrate, an anti-glare coating can be formed with the gloss in the range of 70±10GU, haze 8±2%, and Rₐ in the range of 0.06 to 0.07 µm. Regardless of initial glass temperature before spray, all coatings have a pencil hardness of ≥ 8H.

**Table 4**

| | Glass pre-heating | Clicks | Gloss (GU) | L* | a* | b* | Haze (%) | T(%) @ 550 nm | Pencil Hardness | Ra (µm) |
|---|---|---|---|---|---|---|---|---|---|---|
| Example 11* | No | 11 | 135 | 97.13 | -0.03 | 0.29 | 1.15 | 92.81 | 9H | 0.022 |
| | | 11 | 149 | 97.01 | -0.03 | -0.12 | 0.51 | 92.50 | 8H | 0.030 |
| | | 11 | 137 | 97.10 | -0.02 | 0.26 | 1.17 | 92.74 | 9H | 0.024 |
| | | 11 | 135 | 97.13 | 0.00 | 0.29 | 1.28 | 92.78 | 9H | 0.025 |
| Example 12 | Yes | 11 | 73.9 | 96.57 | 0.03 | 0.08 | 7.81 | 91.41 | 9H | 0.060 |
| | | 11 | 75.1 | 96.67 | 0.04 | 0.06 | 7.55 | 91.64 | 9H | 0.066 |
| | | 11 | 63.4 | 96.46 | 0.05 | 0.10 | 8.15 | 91.12 | 9H | 0.070 |
| | | 11 | 69.1 | 96.53 | 0.05 | 0.07 | 8.09 | 91.28 | 9H | 0.064 |
| Uncoated Glass | | | 151 | 96.77 | -0.04 | 0.10 | 1.1 | 91.93 | | 0.011 |

| | | | | | | | | | | |
|---|---|---|---|---|---|---|---|---|---|---|
| *Comparative Example | | | | | | | | | | |

## Claims

1. A touch screen display demonstrating antiglare properties, wherein the touch screen display comprises a substrate and a coating formed by applying a curable film-forming composition comprising a sol-gel composition, comprising a silane, a mineral acid, and a solvent to at least one surface of the substrate and curing of the curable film-forming composition, wherein the cured coating demonstrates a surface roughness (Rₐ) of no more than 80 nm and a pencil hardness of at least 8H,
wherein the coating is formed by a process comprising:
(a) heating the substrate to a temperature of 200 °F to 400 °F (93.3 to 204.4 °C) to form a heated substrate;
(b) spray applying the curable film-forming composition to at least one surface of the heated substrate to form a coated substrate; and
(c) subjecting the coated substrate to thermal conditions for a time sufficient to effect cure of the curable film-forming composition.

2. The touch screen display of claim 1, wherein the coating comprises a cured inorganic network matrix.

3. The touch screen display of any one of claims 1 or 2, wherein the curable film-forming composition comprises:
(i) a silane present in an amount of less than 32 percent by weight, such as less than 15 percent or less than 7 percent by weight, based on the total weight of the curable film-forming composition;
(ii) a mineral acid; and
(iii) a solvent;
wherein the weight ratio of mineral acid to silane is greater than 0.008:1 and the curable film-forming composition has a solids content of less than 10 percent by weight.

4. The touch screen display according to claim 3, wherein the mineral acid (ii) in the curable film-forming composition comprises nitric acid.

5. The touch screen display according to any one of the preceding claims, wherein the silane in the curable film-forming composition comprises a tetraalkoxysilane.

6. The touch screen display according to claim 5, wherein the tetraalkoxysilane comprises tetramethoxysilane and/or tetraethoxysilane.

7. The touch screen display according to any one of the preceding claims, wherein the coating is an antiglare coating formed by a process comprising:
(a) heating the substrate to a temperature of 200 °F to 400 °F (93.3 to 204.4 °C) to form a heated substrate;
(b) spray applying the curable film-forming composition to at least one surface of the heated substrate to form a substrate coated with a sol-gel layer; wherein the curable film-forming composition has a solids content of less than 10 percent by weight and comprises:
(i) a silane present in an amount of less than 32 percent by weight, based on the total weight of the curable film-forming composition;
(ii) a mineral acid; and
(iii) a solvent;
wherein the weight ratio of mineral acid to silane is greater than 0.008:1; and
(c) subjecting the coated substrate to thermal conditions for a time sufficient to effect cure of the sol-gel layer.

8. The touch screen display of any one of the preceding claims wherein the substrate comprises glass.

9. The touch screen display according to any one of the preceding claims, wherein the curing step (c) comprises heating the coated substrate to a temperature in the range of between 120 °C and 200 °C for at least 1 hour.

10. The touch screen display according to any one of the preceding claims, wherein the curable film-forming composition is applied to the surface of the substrate such that the thickness of the applied coating composition varies across the substrate surface so as to yield a coated article with a gradient gloss across its surface.

11. The touch screen display according to claim 3 or any claim dependent on claim 3, wherein the curable film-forming composition comprises:
(i) a silane comprising a tetraalkoxysilane present in an amount of less than 32 percent by weight, based on the total weight of the curable film-forming composition;
(ii) a mineral acid; and
(iii) a solvent;
wherein the weight ratio of mineral acid to silane is greater than 0.008:1 and less than 0.12:1 and the curable film-forming composition has a solids content of less than 10 percent by weight.

## Patentansprüche

1. Ein berührungsempfindliches Bildschirm-Display, das Blendschutzeigenschaften aufweist, wobei das berührungsempfindliche Bildschirm-Display ein Substrat und eine Beschichtung umfasst, die durch Aufbringen einer härtbaren filmbildenden Zusammensetzung umfassend eine Sol-Gel-Zusammensetzung, umfassend ein Silan, eine Mineralsäure und ein Lösungsmittel auf wenigstens eine Oberfläche des Substrats und Härten der härtbaren filmbildenden Zusammensetzung gebildet wird, wobei die gehärtete Beschichtung eine Oberflächenrauigkeit (Rₐ) von nicht mehr als 80 nm und eine Stifthärte von wenigstens 8H zeigt, wobei die Beschichtung gebildet wird durch ein Verfahren umfassend:
(a) Erhitzen des Substrats auf eine Temperatur von 200 °F bis 400°F (93,3 °C bis 204,4°C), um ein erhitztes Substrat zu bilden,
(b) Aufbringen der härtbaren filmbildenden Zusammensetzung auf wenigstens eine Oberfläche des erhitzten Substrats durch Sprühen, um ein beschichtetes Substrat zu bilden, und
(c) Aussetzen des beschichteten Substrats gegenüber thermischen Bedingungen für eine Zeit, die ausreicht, ein Härten der härtbaren filmbildenden Zusammensetzung zu bewirken.

2. Das berührungsempfindliche Bildschirm-Display des Anspruchs 1, wobei die Beschichtung eine gehärtete anorganische Netzwerkmatrix umfasst.

3. Das berührungsempfindliche Bildschirm-Display des Anspruchs 2, wobei die härtbare filmbildende Zusammensetzung umfasst:
(i) ein Silan in einer Menge von weniger als 32 Gew.-%, wie etwa weniger als 15 Gew.% oder weniger als 7 Gew.%, basierend auf dem Gesamtgewicht der härtbaren filmbildenden Zusammensetzung,
(ii) eine Mineralsäure, und
(iii) ein Lösungsmittel,
wobei das Gewichtsverhältnis von Mineralsäure zu Silan mehr als 0,008:1 beträgt und die härtbare filmbildende Zusammensetzung einen Feststoffgehalt von weniger als 10 Gew.-% aufweist.

4. Das berührungsempfindliche Bildschirm-Display des Anspruchs 3, wobei die Mineralsäure (ii) in der härtbaren filmbildenden Zusammensetzung Salpetersäure umfasst.

5. Das berührungsempfindliche Bildschirm-Display gemäß irgendeinem der vorstehenden Ansprüche, wobei das Silan in der härtbaren filmbildenden Zusammensetzung ein Tetraalkoxysilan umfasst.

6. Das berührungsempfindliche Bildschirm-Display des Anspruchs 5, wobei das Tetraalkoxysilan Tetramethoxysilan und/oder Tetraethoxysilan umfasst.

7. Das berührungsempfindliche Bildschirm-Display gemäß irgendeinem der vorstehenden Ansprüche, wobei die Beschichtung eine Blendschutzbeschichtung ist, die gebildet wird durch ein Verfahren umfassend:
(a) Erhitzen des Substrats auf eine Temperatur von 200 °F bis 400°F (93,3 °C bis 204,4°C), um ein erhitztes Substrat zu bilden,
(b) Aufbringen der härtbaren filmbildenden Zusammensetzung auf wenigstens eine Oberfläche des erhitzten Substrats durch Sprühen, um ein Substrat, das mit einer Sol-Gel-Schicht beschichtet ist, zu bilden, wobei die härtbare filmbildende Zusammensetzung einen Feststoffgehalt von weniger als 10 Gew.-% aufweist und umfasst:
(i) ein Silan, vorhanden in einer Menge von weniger als 32 Gew.-%, basierend auf dem Gesamtgewicht der härtbaren filmbildenden Zusammensetzung,
(ii) eine Mineralsäure, und
(iii) ein Lösungsmittel,
wobei das Gewichtsverhältnis von Mineralsäure zu Silan größer als 0,008:1 ist, und
(c) Aussetzen des beschichteten Substrats gegenüber thermischen Bedingungen für eine Zeit, die ausreicht, ein Härten der härtbaren filmbildenden Zusammensetzung zu bewirken.

8. Das Verfahren gemäß irgendeinem der vorstehenden Ansprüche, wobei das Substrat Glas umfasst.

9. Das berührungsempfindliche Bildschirm-Display gemäß irgendeinem der vorstehenden Ansprüche, wobei der Schritt (c) ein Erhitzen des beschichteten Substrats auf eine Temperatur im Bereich von zwischen 120 °C und 200 °C für wenigstens eine Stunde umfasst.

10. Das berührungsempfindliche Bildschirm-Display gemäß irgendeinem der vorstehenden Ansprüche, wobei die härtbare filmbildende Zusammensetzung auf die Oberfläche des Substrats aufgebracht wird unter Variieren der Schichtdicke der aufgebrachten Beschichtungszusammensetzung über die Substratoberfläche, um so einen beschichteten Gegenstand mit einem Glanzgradienten über seiner Oberfläche zu erzeugen.

11. Das berührungsempfindliche Bildschirm-Display gemäß Anspruch 3 oder irgendeinem von Anspruch 3 abhängigen Anspruch, wobei die härtbare filmbildende Zusammensetzung folgendes umfasst:
(i) ein Silan umfassend ein Tetraalkoxysilan, vorhanden in einer Menge von weniger als 32 Gew.-%, basierend auf dem Gesamtgewicht der härtbaren filmbildenden Zusammensetzung,
(ii) eine Mineralsäure, und
(iii) ein Lösungsmittel,
wobei das Gewichtsverhältnis von Mineralsäure zu Silan größer als 0,008:1 und weniger als 0,12:1 ist und die härtbare filmbildende Zusammensetzung einen Feststoffgehalt von weniger als 10 Gew.-% aufweist.

## Revendications

1. Afficheur à écran tactile offrant des propriétés anti-reflets, lequel afficheur à écran tactile comprend un substrat et un revêtement formé par application, sur au moins une surface du substrat, d'une composition filmogène durcissable comportant une composition sol-gel comprenant un silane, un acide minéral et un solvant, et durcissement de cette composition filmogène durcissable, dans lequel le revêtement durci présente une rugosité de surface (Rₐ) d'au plus 80 nm et une dureté au crayon d'au moins 8H, et pour lequel le revêtement est formé selon un procédé comportant les étapes suivantes :
a) chauffer le substrat à une température de 93,3 à 204,4 °C (200 à 400 °F), ce qui donne un substrat chauffé,
b) appliquer par pulvérisation la composition filmogène durcissable sur au moins une surface du substrat chauffé, ce qui donne un substrat revêtu,
c) et soumettre le substrat revêtu à des conditions de chaleur et pendant un laps de temps qui suffisent pour faire effectivement durcir la composition filmogène durcissable.

2. Afficheur à écran tactile conforme à la revendication 1, dans lequel le revêtement comprend une matrice en réseau, inorganique et durcie.

3. Afficheur à écran tactile conforme à l'une des revendications 1 et 2, pour lequel la composition filmogène durcissable comprend :
i) un silane présent en une proportion inférieure à 32 % en poids, comme moins de 15 % en poids ou moins de 7 % en poids, par rapport au poids total de la composition filmogène durcissable,
ii) un acide minéral,
iii) et un solvant,
étant entendu que le rapport pondéral de l'acide minéral au silane vaut plus de 0,008/1, et que la composition filmogène durcissable présente une teneur en solides inférieure à 10 % en poids.

4. Afficheur à écran tactile conforme à la revendication 3, pour lequel l'acide minéral (ii) de la composition filmogène durcissable comprend de l'acide nitrique.

5. Afficheur à écran tactile conforme à l'une des revendications précédentes, pour lequel le silane de la composition filmogène durcissable comprend un tétraalcoxy-silane.

6. Afficheur à écran tactile conforme à la revendication 5, pour lequel le tétraalcoxy-silane comprend du tétraméthoxy-silane et/ou du tétraéthoxy-silane.

7. Afficheur à écran tactile conforme à l'une des revendications précédentes, dans lequel le revêtement est un revêtement anti-reflets formé selon un procédé comportant les étapes suivantes :
a) chauffer le substrat à une température de 93,3 à 204,4 °C (200 à 400 °F), ce qui donne un substrat chauffé,
b) appliquer par pulvérisation la composition filmogène durcissable sur au moins une surface du substrat chauffé, ce qui donne un substrat revêtu d'une couche de sol-gel, étant entendu que la composition filmogène durcissable présente une teneur en solides inférieure à 10 % en poids et comprend :
i) un silane, présent en une proportion inférieure à 32 %, en poids rapporté au poids total de la composition filmogène durcissable,
ii) un acide minéral,
iii) et un solvant,
étant entendu que le rapport pondéral de l'acide minéral au silane vaut plus de 0,008/1,
c) et soumettre le substrat revêtu à des conditions de chaleur et pendant un laps de temps qui suffisent pour faire effectivement durcir la couche de sol-gel.

8. Afficheur à écran tactile conforme à l'une des revendications précédentes, dans lequel le substrat comprend un verre.

9. Afficheur à écran tactile conforme à l'une des revendications précédentes, pour lequel l'étape de durcissement (c) comprend le fait de chauffer le substrat revêtu à une température située dans l'inter-valle compris entre 120 et 200 °C pendant au moins 1 heure.

10. Afficheur à écran tactile conforme à l'une des revendications précédentes, pour lequel on applique la composition filmogène durcissable sur la surface du substrat en faisant varier, dans l'étendue de la surface du substrat, l'épaisseur du revêtement de composition appliquée, de manière à obtenir un article revêtu présentant un gradient de brillance dans l'étendue de sa surface.

11. Afficheur à écran tactile conforme la revendication 3 ou à l'une des revendications rattachées à la revendication 3, pour lequel la composition filmogène durcissable comprend :
i) un silane comprenant un tétraalcoxy-silane, présent en une proportion inférieure à 32 %, en poids rapporté au poids total de la composition filmogène durcissable,
ii) un acide minéral,
iii) et un solvant,
étant entendu que le rapport pondéral de l'acide minéral au silane vaut plus de 0,008/1 et moins de 0,12/1, et que la composition filmogène durcissable présente une teneur en solides inférieure à 10 % en poids.
